# EUROPÄISCHE PATENTSCHRIFT

(11) **EP 1 348 861 B1**
(45) Veröffentlichungstag und Bekanntmachung des Hinweises auf die Patenterteilung: **02.08.2006**
(21) Anmeldenummer: 03004915.9
(22) Anmeldetag: 06.03.2003
(51) Int. Cl.: F02M 31/13

(54) **Heizflansch, insbesondere zum Vorwärmen von Luft in einer Ansaugleitung einer Brennkraftmaschine**
Heating flange, in particular for air preheating in an intake manifold of an internal combustion engine
Bride d'échauffement, en particulier pour l'échauffement de l'air dans un conduit d'admission d'un moteur à combustion interne

(30) Priorität: 28.03.2002 DE 10214166
(43) Veröffentlichungstag der Anmeldung: 01.10.2003
(73) Patentinhaber: DBK David + Baader GmbH, 76870 Kandel (DE)
(72) Erfinder: Gschwind, Thomas, 67098 Bad Dürkheim (DE); Weber, Thomas, 76773 Kuhardt (DE); Proner, Mathias, 76139 Karlsruhe (DE); Bauer, Hans-Peter, 76886 Klingenmünster (DE)
(74) Vertreter: Grünecker, Kinkeldey, Stockmair & Schwanhäusser Anwaltssozietät

(56) Entgegenhaltungen:
- EP-A- 0 969 199
- WO-A-99/53187
- DE-A- 10 026 339
- US-A- 2 320 528
- US-A- 6 040 557
- US-A- 6 054 678
- US-B1- 6 242 712

## Beschreibung

Die vorliegende Erfindung bezieht sich auf einen Heizflansch, insbesondere zum Vorwärmen von Luft in einer zu einer Brennkraftmaschine führenden Ansaugleitung nach dem Oberbegriff des Patentanspruchs 1.

Üblicherweise wird z. B. bei Dieselverbrennungsmotoren auf Vorverwirbelungskammern weitgehend verzichtet und durch eine direkte Einspritzung von Kraftstoff unter hohem Druck kann die Vorglühzeit stark reduziert werden. Im Falle von LKW wird auf ein Vorglühen zumeist ganz verzichtet und die zum Zünden des Kraftstoffes notwendige Temperatur wird hier durch starke Luftkompression erreicht. Eine solche Technik ist allerdings stark von der Temperatur und der Dichte der angesaugten Verbrennungsluft abhängig. Bei tiefen Temperaturen muss der elektrische Anlasser den Motor solange drehen, bis in den Verbrennungsräumen ein Temperaturanstieg infolge von mehreren Verdichtungsvorgängen erfolgt ist und das Entzünden des Kraftstoffes möglich ist. Fahrzeuge, die häufig bei kalten Temperaturen und geringen Luftdrücken betrieben werden, rüstet man deshalb mit Systemen aus, welche die Ansaugluft vor dem Anlassvorgang beheizen. Solche Systeme arbeiten derzeit beispielsweise mit Gasbrennern.

Hier besteht allerdings der Nachteil, dass der Gehalt an für die spätere Verbrennung des Kraftstoffes benötigtem Sauerstoff reduziert wird und darüber hinaus der technische Aufwand vergleichsweise hoch ist.

Deshalb finden alternativ elektrische Heizsysteme, wie sie beispielsweise in der DE 100 26 339 A1 oder in der DE 195 15 533 C2 gezeigt sind, Anwendung. Insbesondere die in der DE 100 26 339 A1 gezeigte Vorrichtung zum Vorwärmen von Luft in einer zu einer Dieselbrennkraftmaschine führenden Ansaugleitung, die eine mittels eines verschleißfrei arbeitenden Halbleiterbauelements steuerbare Schalteinrichtung aufweist, ermöglicht, dass der Heizflansch beliebig oft und in sehr kurzen Abständen, d. h. mit verhältnismäßig hohen Frequenzen, aus- und eingeschaltet werden kann. Somit kann die Leistung des Heizflansches und damit die Anpassung an die Warmlaufbedingungen der Brennkraftmaschine annähernd stufenlos erfolgen.

Bei dieser Vorwärmvorrichtung tritt allerdings das Problem auf, dass aufgrund der hohen fließenden Ströme (bis zu 400 Ampere und mehr) an den Heizflansch ganz besondere Anforderungen bezüglich Stromfestigkeit, Temperaturbeständigkeit und mechanischer Stabilität gestellt werden müssen.

Aus der US-Patentschrift 6,040,557 ist ein modular aufgebauter Heizflansch zur Erwärmung von Ansaugluft in einem Verbrennungsmotor bekannt, bei dem ein mäanderförmiges Heizelement an den jeweiligen Umkehrpunkten in Vertiefungen von Isolierkörpern fixiert ist und in einem im Wesentlichen U-förmigen Haltebügel angeordnet ist. Bei der in diesem Dokument gezeigten Anordnung verlaufen die langen Schenkel der mäanderförmigen Heizelemente parallel zu der Basis des U-förmigen Haltebüge!s und Anfang und Ende des Heizelementmäanders sind jeweils mit der Basis des Haltebügels einerseits sowie der Abdeckung andererseits verschraubt. Weiterhin weist der Haltebügel Öffnungen auf, durch welche ein seitliches Eindringen von zu erwärmender Luft möglich ist.

Aus der US-Patentschrift 6,054,678 ist eine Heizvorrichtung mit einer Heizspirale bekannt, bei der die Temperaturüberwachung mittels eines Thermoelements erfolgt. Die hier gezeigte Heizung/Sensoreinheit ist für den Einsatz in einem Lötkolben gedacht.

Die Druckschrift US 6,242,712 B1 zeigt eine Heizvorrichtung für Ansaugluft in einem Verbrennungsmotor, bei der das mäanderförmige Heizelement so in der Halterung angeordnet ist, dass seine langen Schenkel mit der Basis der Halterung einen Winkel einschließen und jeweils Anfang und Ende des Mäanders abgewinkelt sind, um eine Verschraubung mit der Halterung zu erlauben.

Die internationale veröffentlichte Patentanmeldung WO 99/53187 A1 offenbart eine modulare Ansaugluftheizvorrichtung für einen Verbrennungsmotor. Dabei ist ein mäanderförmiges Heizelement in aus Isolierstoff gefertigten Vertiefungen eines Haltebügels einerseits fixiert und andererseits über Schraubverbindungen mit einem weiteren gegenüberliegenden Haltebügel verbunden.

Es ist Aufgabe der vorliegenden Erfindung, einen verbesserten Heizflansch, insbesondere zum Vorwärmen von Luft in einer zu einer Brennkraftmaschine führenden Ansaugleitung anzugeben, der ein schnelles Aufheizen der Ansaugluft bei gleichzeitiger erhöhter Robustheit und vereinfachter Montage gewährleistet.

Diese Aufgabe wird durch einen Heizflansch mit den Merkmalen des Patentanspruchs 1 gelöst. Vorteilhafte Weiterbildungen der Erfindung sind Gegenstand der Unteransprüche.

Der Erfindung liegt die Erkenntnis zugrunde, dass ein besonders guter Wärmeübergang zwischen dem Heizelement und der vorzuwärmenden Luft sowie eine besonders robuste und rüttelsichere Bauweise eines Heizflansches dadurch erzielt werden kann, dass der Grundkörper einen Haltebügel mit im Wesentlichen U-förmigem Querschnitt aufweist und das Heizelement mindestens eine im Wesentlichen U-förmig ausgestaltete Mäanderschleife umfasst, die mit dem Haltebügel an dessen Basis fest verbunden ist. Auf diese Weise ist das Heizelement einerseits mechanisch optimal geschützt und wird dennoch in einem möglichst großen Bereich seiner Oberfläche von der zu erwärmenden Luft umströmt. Aufgrund dieser robusten Konstruktion ist das Heizelement gegen die starken Motorschwingungen resistent. Ein weiterer Vorteil des erfindungsgemäßen Heizflansches ist seine einfache und damit kostengünstige Montage aufgrund weniger elektrischer und mechanischer Schnittstellen.

Gemäß einer vorteilhaften Ausführungsform ist das Heizelement gegenüber dem Haltebügel an dessen Basis elektrisch isoliert. Auf diese Weise ist es möglich, den Haltebügel auf ein anderes Potential als das Heizelement, beispielsweise auf Masse, zu legen.

Eine besonders kostengünstige und effektive Möglichkeit, eine solche elektrische Isolation zu realisieren, besteht darin, zwischen dem Heizelement und der Basis des Haltebügels eine im Wesentlichen rechteckige Platte aus einem elektrisch isolierenden Material, vorzugsweise Glimmer, Pressglimmer oder Keramik, anzuordnen. Verwendet man hier beispielsweise den Werkstoff Mikanit, so bietet dieser den Vorteil einer hohen Durchschlagfestigkeit (größer 20 kV/mm), einer zulässigen Verwendungstemperatur von 600 °C bis 900 °C, eines sehr geringen Wasseraufnahmevermögens (weniger als 1 %) sowie einer guten Wärmeleitfähigkeit. Darüber hinaus lässt sich dieser Werkstoff auf besonders einfache Weise in die gewünschte Form bringen.

Eine insbesondere unter den rauen Umweltbedingungen in der Kraftfahrzeuganwendung besonders sichere Methode der Verbindung zwischen Haltebügel und Heizelement stellt das Vernieten dar.

Ebenfalls sehr sicher, darüber hinaus aber auch fertigungstechnisch besonders einfach und materialsparend ist die Verbindung zwischen Heizelement und Haltebügel über eine Schweißverbindung.

Ein häufig verwendetes Material für Heizelemente stellen ferritische Eisen-Chrom-Aluminium-Legierungen dar. Die Legierung Kanthal D®, ein eingetragenes Warenzeichen der Firma Kanthal AB, besitzt beispielsweise eine Temperaturstabilität bis 1300 °C und wird für Heizaufgaben sowohl im Haushaltsbereich wie auch für industrielle Anwendungen häufig eingesetzt.

Gemäß einer vorteilhaften Ausführungsform weist der Grundkörper des Heizflansches weiterhin einen Deckel, über den der Heizflansch mit der Ansaugleitung verbindbar ist, auf. Dadurch kann eine besonders einfache Montage des Heizflansches in der Ansaugleitung erreicht werden. Die Abdichtung dieses Deckels gegenüber der Ansaugleitung kann beispielsweise über eine Flachdichtung oder doppelte O-Ringe, die an dem Deckel angeordnet sind, erfolgen. Dadurch, dass bei dieser Ausführungsform der Haltebügel mit den Heizelementen vollständig in den Luftstrom der Ansaugleitung eintaucht, kann eine besonders effektive Aufheizung der Luft erfolgen.

Gemäß einer weiteren vorteilhaften Ausführungsform ist der Haltebügel mit dem Deckel elektrisch leitend verbunden. Somit kann der Haltebügel, ebenso wie der Deckel, auf Masse gelegt werden und wirkt so nicht als Antenne für die Abstrahlung eventueller elektromagnetischer Störungen, die durch die Ansteuerung der Heizelemente verursacht werden.

In einer alternativen Ausführungsform ist der Haltebügel gegenüber dem Deckel elektrisch isoliert. Dies bietet den Vorteil, dass zwischen dem Haltebügel und dem Heizelement keine elektrische Isolationsschicht mehr erforderlich ist und dadurch die Herstellung schneller und materialsparender erfolgen kann.

Das Material der U-förmigen Mäanderschleife des Heizelementes weist in der Regel einen anderen Temperaturkoeffizienten auf als das Material, aus dem der Haltebügel gefertigt ist. Darüber hinaus werden an dem Heizelement auch wesentlich höhere Temperaturen erreicht. Um während des Betriebes die unterschiedlichen Ausdehnungen von Haltebügel und Heizelement gegeneinander abgleichen zu können, sind die Schenkel der U-förmigen Mäanderschleife des Heizelements in dem freistehenden, vom Luftstrom umgebenen Bereich mindestens einmal abgewinkelt. Auf diese Weise wird eine federnde Lagerung des Heizelements in dem Haltebügel bewirkt, so dass das Heizelement auch bei heftigen Erschütterungen sicher fixiert ist und bei Wärmeeinwirkung eine Verformung in eine definierte Richtung möglich ist.

Gemäß einer vorteilhaften Weiterbildung der vorliegenden Erfindung weist der Heizflansch zwei Heizelemente auf, die in Richtung quer zu dem U-förmigen Querschnitt des Haltebügels gegeneinander versetzt angeordnet sind. Diese beiden Heizelemente bieten den Vorteil einer erhöhten Heizleistung und einer größeren Oberfläche zum Erwärmen der durchströmenden Luft.

Um das Luftvolumen möglichst effektiv mit Heizelementen zu durchsetzen, können die Schenkel der Mäanderschleifen der beiden Heizelemente in jeweils entgegengesetzter Richtung abgewinkelt sein.

Für einen besonders guten Wärmeübergang kann der Haltebügel an seinen Flanken Öffnungen zum Einströmen der zu erwärmenden Luft quer zu der Öffnung des U-förmigen Querschnitts aufweisen.

Gemäß einer vorteilhaften Ausführungsform weist der Heizflansch eine Schalteinrichtung zum Ein- und Ausschalten der elektrischen Leistung an dem Heizelement auf. Durch eine solche Schalteinrichtung kann die elektrische Leistung nach Bedarf dem Heizelement zugeführt werden und es kann beispielsweise durch definiertes Ein- und Ausschalten eine Pulsweitenmodulation zur Regelung der Heizleistungszufuhr realisiert werden.

Sieht man für das Ein- und Ausschalten des Heizflansches eine Schalteinrichtung mit einem Halbleiterbauelement vor, bietet diese Ausführungsform den Vorteil, dass das Halbleiterbauelement verschleißfrei und sicher schaltet, dass wesentlich höhere Schaltfrequenzen realisiert werden können und die Baugröße der gesamten Schalteinrichtung gegenüber Anordnungen mit Relais stark miniaturisiert werden kann.

Sieht man an dem Heizflansch mindestens zwei getrennt ansteuerbare Heizelemente vor, die mit jeweils einer Schalteinrichtung zum Ein- und Ausschalten der elektrischen Leistungszufuhr verbunden sind, so können die beiden Heizelemente unabhängig voneinander angesteuert werden, was die Flexibilität der Steuerung deutlich erhöht.

So kann beispielsweise die Leistungszufuhr der beiden Heizelemente derart zeitlich versetzt erfolgen, dass elektromagnetische Störungen, die durch die Ein- und Ausschaltzyklen der Heizelemente verursacht werden, sich im zeitlichen Mittel aufheben. Weil die in der Leitungsinduktivität gespeicherte Störenergie proportional zum fließenden Strom ist, wird durch Aufteilung der Ströme die elektromagnetische Störung entsprechend reduziert.

Ein Mikrocontroller, der die Steuerung der Leistungszufuhr des Heizelements übemimmt, gewährleistet eine an die Motoreigenschaften optimal angepasste und flexibel einstellbare Heizcharakteristik. Der Mikrocontroller kann außerdem die folgenden Aufgaben übernehmen:
- Sicherheitsabschaltung bei Erreichen der Maximaltemperatur bzw. maximalen Einschaltdauer,
- Überwachung der Halbleiterschaltelemente,
- Auslösen von Sicherheitsabschalteinrichtungen,
- Ermitteln des fließenden Stromes, dadurch Erkennen von Übergangswiderständen,
- Diagnosefunktionen,
- Verringern der elektromagnetischen Abstrahlung durch entsprechende Ansteueralgorithmen.

Sieht man mindestens einen Temperaturfühler zum Erfassen auftretender Temperaturwerte, beispielsweise der zu erwärmenden Luft, aber auch der Außentemperatur oder dergleichen vor, so bietet diese Lösung den Vorteil, dass der Erwärmungsvorgang nicht mehr nur gesteuert, sondern geregelt und damit auf besonders energiesparende und effiziente Weise durchgeführt werden kann. Ein derartiger Temperaturfühler kann auch zum Schutz der Elektronik vor Überhitzung dienen.

Anhand der in den beiliegenden Zeichnungen dargestellten Ausgestaltungen wird die Erfindung im folgenden näher erläutert. Ähnliche oder korrespondierende Einzelheiten der erfindungsgemäßen elektrischen Schaltung sind in den Figuren mit denselben Bezugszeichen versehen. Es zeigen:
- **Figur 1**: eine perspektivische Darstellung eines Heizflansches gemäß einer ersten vorteilhaften Ausführungsform;
- **Figur 2**: eine Seitenansicht des Heizflansches aus Figur 1;
- **Figur 3**: eine um 90° gedrehte Seitenansicht des Heizflansches aus Figur 2;
- **Figur 4**: eine Ansicht von oben auf den Heizflansch aus Figur 1;
- **Figur 5**: eine perspektivische Darstellung eines Heizflansches gemäß einer zweiten vorteilhaften Ausführungsform;
- **Figur 6**: eine Seitenansicht des Heizflansches aus Figur 5;
- **Figur 7**: eine um 90° gedrehte Seitenansicht des Heizflansches aus Figur 6;
- **Figur 8**: eine Ansicht von oben auf den Heizflansch aus Figur 5;
- **Figur 9**: eine perspektivische Ansicht eines Heizflansches gemäß einer dritten vorteilhaften Ausführungsform;
- **Figur 10**: ein Zeitdiagramm der in den Heizflansch eingespeisten elektrischen Leistung;
- **Figur 11**: ein Schaltbild eines elektrischen Schalteinrichtung zum Ansteuern zweier Heizelemente;
- **Figur 12**: ein Zustandsdiagramm der Ansteuerung der beiden Heizelemente sowie der gesamten eingespeisten Leistung.

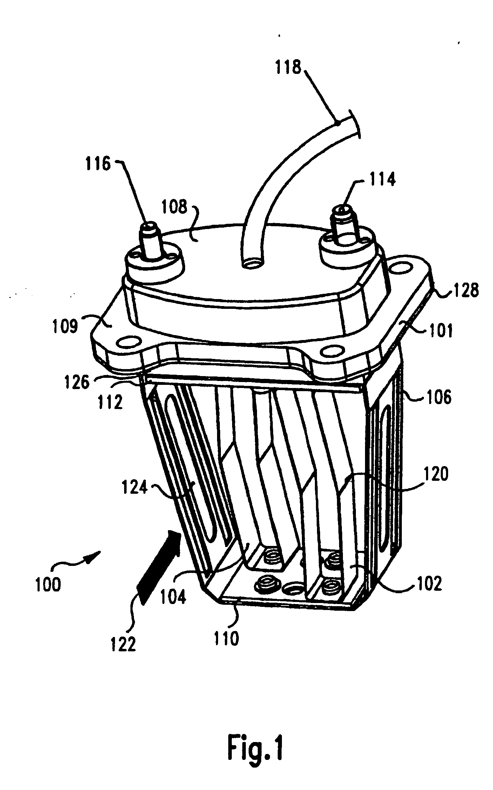

Figur 1 zeigt eine perspektivische Darstellung eines erfindungsgemäßen Heizflansches gemäß einer ersten vorteilhaften Ausführungsform. Der Heizflansch 100 weist einen Grundkörper 101 auf, der so an einer zu einer Brennkraftmaschine führenden Ansaugleitung montiert werden kann, dass die beiden Heizelemente 102 und 104 in den zu erwärmenden Luftstrom eintauchen. Die Heizelemente 102, 104 werden durch hindurchfließenden elektrischen Strom erwärmt und heizen so die sie umspülende Luft auf.

Jedes der beiden Heizelemente 102, 104 wird in der gezeigten Ausführungsform durch eine im Wesentlichen U-förmige Mäanderschleife gebildet. Solche Mäanderheizelemente sind zur Erwärmung gasförmiger Medien besonders gut geeignet, weil durch den direkten Kontakt mit dem Heizleiter eine gute Wärmeübertragung gegeben ist. Die beiden Heizelemente 102, 104 werden durch einen Haltebügel 106 mechanisch stabilisiert. Für eine sichere Befestigung sind die Heizelemente 102, 104 mit der Basis des im Wesentlichen U-förmigen Haltebügels 106 über Nietverbindungen verbunden. Darüber hinaus ist jedes Heizelement 102, 104 an die Spannungsversorgung angeschlossen.

Sowohl gegenüber einem Trageelement 109, das beispielsweise aus Aluminium hergestellt ist, wie auch gegenüber dem Haltebügel 106 sind die Heizelemente 102, 104 durch Pressglimmerplatten 110, 112, bestehend aus dem Werkstoff Mikanit, elektrisch isoliert. Ein vorzugsweise aus Kunststoff herstellbarer Deckel 108 dient zum Abdichten einer entsprechenden Öffnung in der Ansaugleitung. In dem Deckel 108 sind außerdem die Anschlussleitungen für die Stromversorgung sowie die Steuerungselektronik integriert. Nach außen geführt sind ein Bolzen für positive Spannung 114, ein Bolzen für den Masseanschluss 116 sowie das Anschlusskabel 118 für die Steuerung. Dabei weisen die beiden Stromanschlussstifte 114, 116 ein Gewinde auf, so dass der Deckel 108 mittels zweier entsprechender Muttern auf das Aluminiumtrageelement 109 gepresst werden kann.

Die Abdichtung des Deckels 108 bei eingebautem Heizflansch gegenüber der Ansaugleitung erfolgt hier über eine Flachdichtung 128, beispielsweise aus Silicon. Es kann aber auch eine doppelte O-Ringdichtung vorgesehen sein.

Da die Heizelemente 102, 104 sowohl im Bereich des Trageelements 109 wie auch im Bereich der Basis des Haltebügels 106 mechanisch starr fixiert sind, muss gewährleistet sein, dass bei einer unterschiedlichen thermischen Ausdehnung der Heizelemente 102, 104 im Vergleich zu dem Haltebügel 106 eine definierte Lageänderung der Heizelemente 102, 104 stattfindet. Zu diesem Zweck können die Schenkel der U-förmigen Mäanderschleifen der Heizelemente 102, 104 so abgewinkelt sein, dass Knicke 120 entstehen, die für eine gerichtete, vorbestimmte Lageänderung bei Längenzunahme der Schenkel sorgt. Auf diese Weise kann sichergestellt werden, dass sich die Schenkel der Mäanderschleifen der Heizelemente aufeinander zu bewegen oder mit dem Haltebügel 106 in Kontakt geraten und so im Extremfall einen elektrischen Kurzschluss verursachen. Ebenso kann durch diese federnde Ausformung der Heizelemente ein Abreißen z. B. aufgrund von Motorschwingungen verhindert werden.

Die Hauptströmungsrichtung der Luft ist quer zu dem U-förmigen Querschnitt des Haltebügels 106 anzunehmen, wie durch den Pfeil 122 angedeutet. Jedoch sind an den Schenkeln des Haltebügels 106 Öffnungen 124 vorgesehen, die auch ein Einströmen der zu erwärmenden Luft quer zur Hauptstromrichtung 122 erlauben. In der gezeigten Ausführungsform ist der Haltebügel 106 mit dem Aluminiumblock 126 des Deckels 108 leitend verbunden und auf Masse gelegt. Die Isolation zu den Heizelementen 102, 104 erfolgt über die Isolierplatte 112.

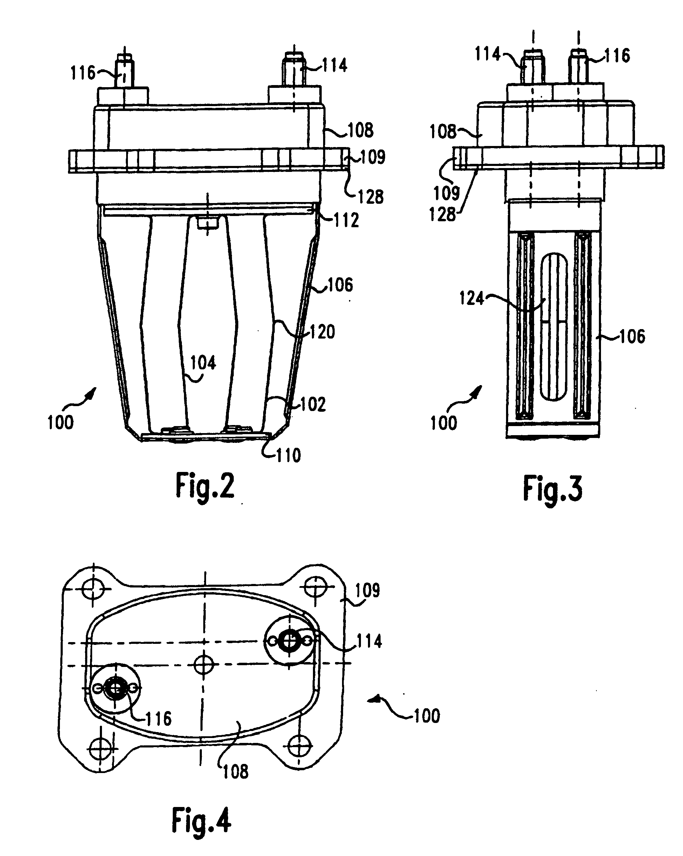

Verschiedene Ansichten des Heizflansches 100 gemäß der in Figur 1 gezeigten Ausführungsform sind in den Figuren 2 bis 4 dargestellt.

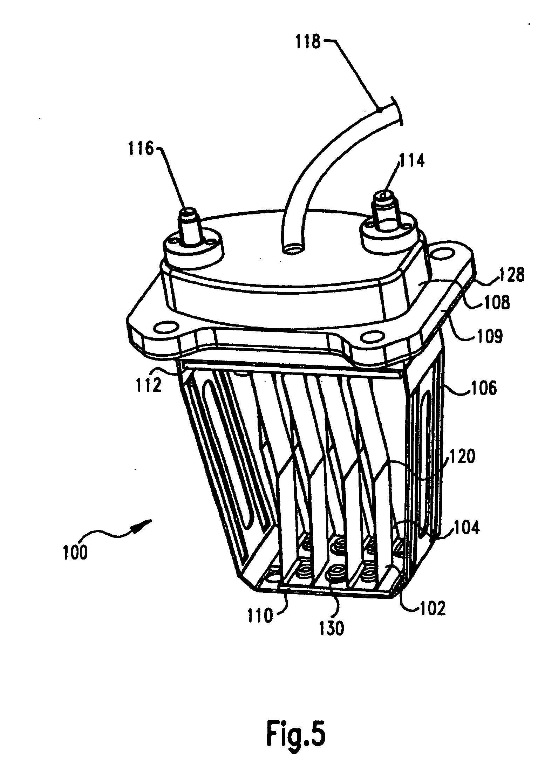

Figur 5 zeigt eine perspektivische Darstellung einer zweiten vorteilhaften Ausführungsform, bei der jedes Heizelement 102, 104 aus zwei im Wesentlichen U-förmigen Mäanderschleifen besteht. Bei dieser Ausführungsform taucht jedes Heizelement 102, 104 mit insgesamt vier wärmeabgebenden Schenkeln in den Luftstrom ein. Auch bei dieser Ausführungsform ist es zweckmäßig, Knicke 120 für die definierte Auslenkung bei thermischer Ausdehnung vorzusehen.

Die beiden Heizelemente 102, 104 sind in einer Richtung quer zu dem U-förmigen Haltebügel 106 gesehen hintereinander und außerdem parallel zu dem U-förmigen Querschnitt des Haltebügels 106 gegeneinander versetzt angeordnet. Auf diese Weise kann eine größtmögliche Oberfläche der beiden Heizelemente 102, 104 vom Strom der zu erwärmenden Luft umspült werden. Auch bei dieser Ausführungsform erfolgt die Isolation der Heizelemente 102, 104 gegenüber der Basis des Haltebügels 106 sowie gegenüber dem Aluminiumblock 126 des Deckels 108 über Pressglimmerplatten 110 und 112. Sowohl die mechanische Fixierung der Heizelemente 102, 104, wie auch die Befestigung der zur Isolationsplatte 110 an der Basis des Haltebügels 106 erfolgt über Nieten 130.

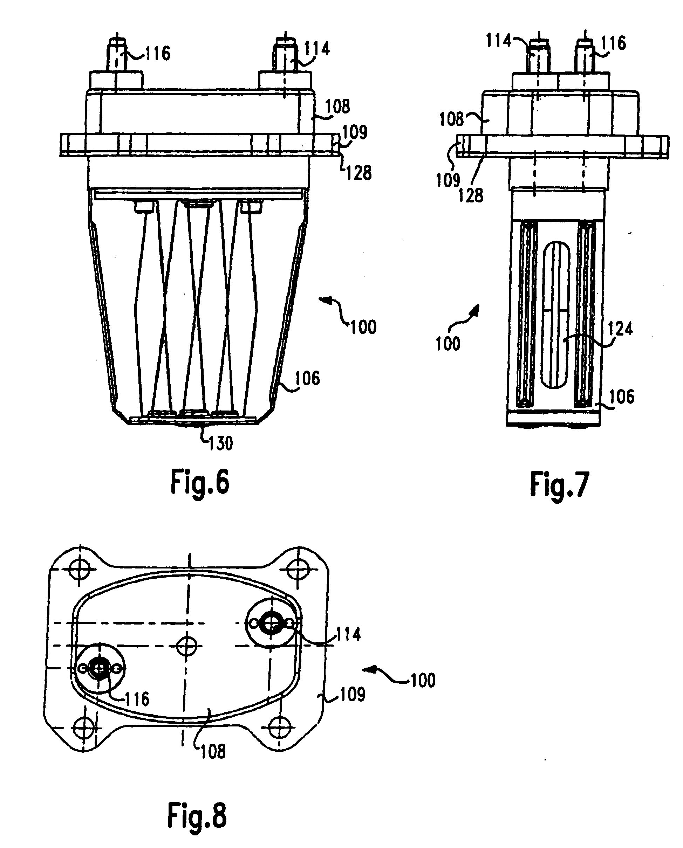

Die Figuren 6 bis 8 zeigen verschiedene Ansichten des Heizflansches 100 gemäß der in Figur 5 gezeigten Ausführungsform.

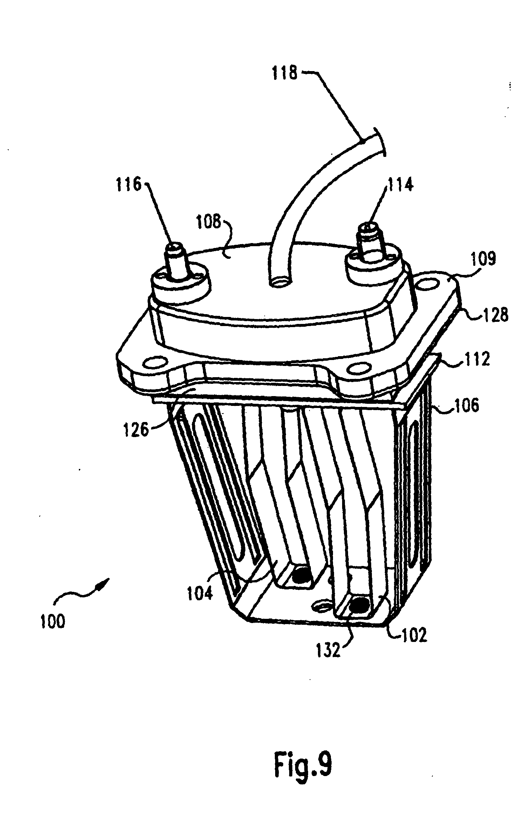

In Figur 9 ist in perspektivischer Darstellung ein Heizflansch 100 gemäß einer dritten vorteilhaften Ausführungsform gezeigt. Bei dieser Ausführungsform ist der Haltebügel 106 nicht wie bei den zuvor gezeigten Ausführungsformen leitend mit dem Aluminiumblock 126 verbunden, sondern durch eine Isolation 112 von diesem elektrisch isoliert. Da der Haltebügel 106 bei dieser Ausführungsform an der Basis seines U-förmigen Querschnitts nicht mehr gegenüber den stromführenden Heizelementen 102, 104 elektrisch isoliert sein muss, genügt es zur mechanischen Fixierung der Heizelemente 102, 104 an dem Haltebügel 106 Schweißverbindungen 132 vorzusehen. Dadurch kann die Herstellung weiter vereinfacht und verbilligt werden. Obwohl Figur 9 die der Figur 1 entsprechende Ausführungsform mit jeweils nur einer Mäanderschleife pro Heizelement 102, 104 zeigt, kann diese Ausführungsform selbstverständlich auch bei Heizelementen mit mehr als einer Mäanderschleife eingesetzt werden. In jedem Fall können sowohl die Nieten 130 wie auch die Isolation 110 entfallen.

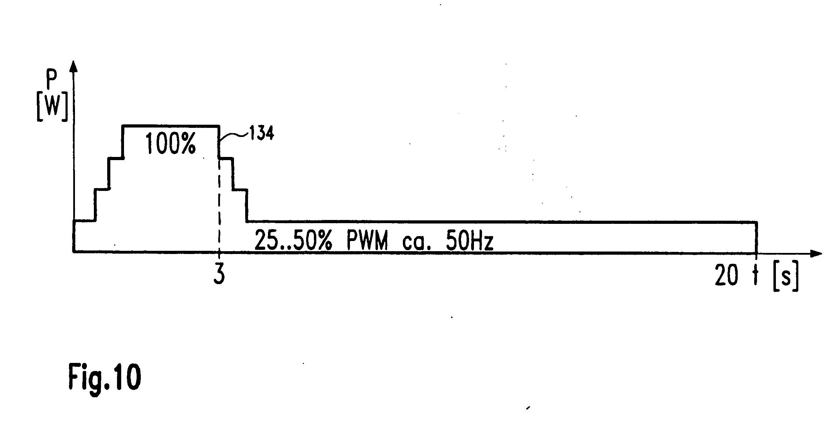

Figur 10 zeigt beispielhaft einen typischen Zeitverlauf der Heizleistung beim Anlassen eines Dieselmotors. Vor dem Anlasszeitpunkt 134, der beispielsweise bei drei Sekunden liegt, erfolgt eine Vorwärmung der Ansaugluft mit 100%iger Heizleistung. Durch gesteuertes intermittierendes Abschalten der Heizleistungszufuhr kann in einfacher Weise eine Pulsweitenmodulation erreicht werden und nach dem Anlassen kann die Luft noch einen vorbestimmten Zeitraum lang mit geringerer Heizleistung (beispielsweise 25 % bis 50 %) angewärmt werden. Dies ist z. B. dann sinnvoll, wenn die Außentemperaturen sehr niedrig sind, und erfolgt in dem gezeigten Beispiel über eine Zeitspanne von 20 Sekunden nach dem Einschalten der Heizung. Die maximale elektrische Heizleistung liegt im Bereich von ca. 10 kW. Durch diese hohe Leistung ist eine besonders rasche Aufheizung der Ansaugluft vor dem Anlassen gewährleistet.

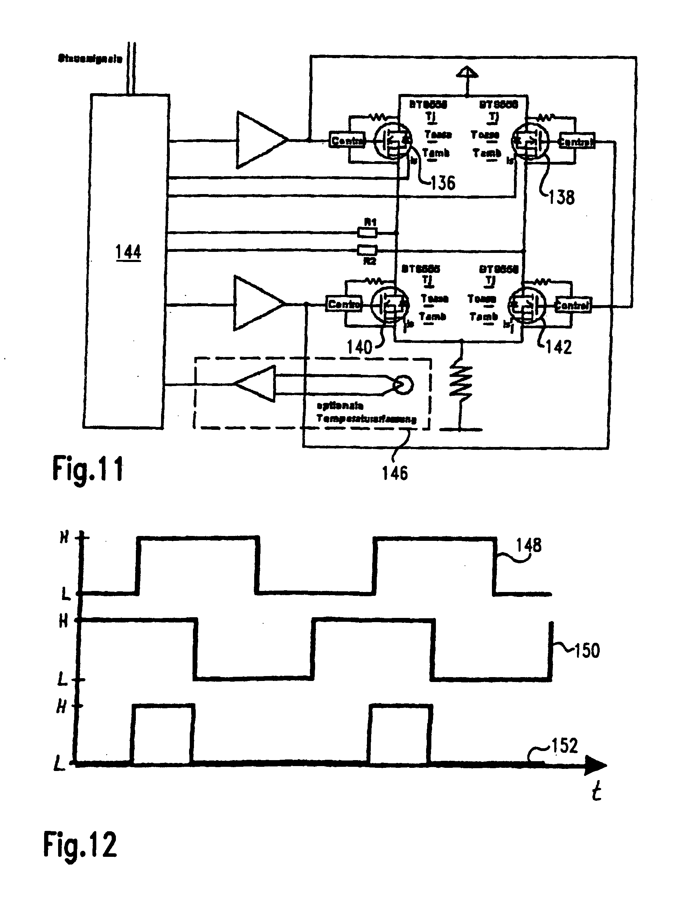

In Figur 11 ist ein Schaltplan der elektronischen Steuerung für einen Heizflansch mit zwei Heizelementen gezeigt. Durch den Einsatz von zwei Heizkreisen und schnellen, verschleißfreien Halbleiterschaltern 136, 138, 140 und 142 besteht die Möglichkeit, die Heizleistung kontinuierlich zu steuern und somit eine eventuell notwendige Aufheizung der Ansaugluft mit geringerer Leistung auch im Fahrbetrieb zu ermöglichen.

Setzt man, wie in Figur 11 gezeigt, zwei Halbleiterschaltelemente in Reihe zu einem Heizelement ein, kann die Funktion der Halbleiter überprüft werden. Somit ist eine Abschaltmöglichkeit gewährleistet und es kann auf ein Sicherungselement verzichtet werden. Übersteigt der Strom durch ein Heizelement die maximale Stromtragefähigkeit eines MOSFET, können mehrere Halbleiterschalter parallel geschaltet werden.

Die Steuerungselektronik beinhaltet einen Mikrocontroller, der eine Überlastung der Heizkreise verhindert, deren Funktion überwacht und bei Störungen ein Meldesignal absetzt. Weiterhin ist die Elektronik in der Lage, bei dauerhaften Überspannungen im Bordnetz die Heizkreise kontrolliert einzuschalten, um das Bordnetz elektrisch zu belasten und somit die Überspannung zu verringern. Eine optionale Temperaturerfassung kann über den Temperaturfühler 146 erfolgen und auf der Basis dieser Information kann eine geregelte Ansaugluftvorwärmung vom Mikrocontroller 144 durchgeführt werden. Anstelle der gezeigten vier Halbleiterschalter 136 bis 142 kann auch ein entsprechender einzelner MOS-Feldeffekttransistor verwendet werden.

Figur 12 zeigt den Zeitablauf der Ansteuersignale für die beiden Heizelemente und den daraus resultierenden Zeitverlauf der Lasteinschaltung. So können die beiden Heizelemente so ein- und ausgeschaltet werden, dass das Heizelement 2 (siehe Kurve 150) dann ausgeschaltet wird, wenn das Heizelement 1 (entsprechend der Kurve 148) gerade die Hälfte seiner "EIN"-Phase erreicht hat. Die Last ist genau dann eingeschaltet, wenn beide Heizelemente eingeschaltet sind (Kurve 152). Eine solche zeitlich versetzte Ansteuerung der beiden Heizelemente ist z. B. dann vorteilhaft, wenn man die durch die Heizelemente verursachten elektromagnetischen Störungen verringern will.

Über die bisher gezeigten Ausführungsformen hinaus kann auch ein optischer Sensor eingesetzt werden, welcher Infrarot-Licht detektiert. Mit diesem könnte man das Aufglühen der Heizelemente überwachen und entsprechend regeln. Somit wäre eine maximale Leistungszufuhr möglich, die dem jeweiligen Luftstrom angepasst würde, ohne dass der Luftstrom aufwändig ermittelt werden muss. Außerdem ist eine sichere Betriebsweise möglich, falls der Luftstrom ausfällt.

## Patentansprüche

1. Heizflansch, insbesondere zum Vorwärmen von Luft in einer zu einer Brennkraftmaschine führenden Ansaugleitung, wobei der Heizflansch (100) mindestens ein Heizelement (102, 104) zur Erwärmung der vorbeiströmenden Luft sowie einen Grundkörper (101) zur mechanischen Halterung und elektrischen Kontaktierung des Heizelements (102, 104) aufweist,
wobei der Grundkörper einen Haltebügel (106) mit im Wesentlichen U-förmigem Querschnitt aufweist und das Heizelement (102, 104) mindestens eine im Wesentlichen U-förmig ausgestaltete Mäanderschleife umfasst, die mit dem Haltebügel (106) an dessen Basis fest verbunden ist,
**dadurch gekennzeichnet,**
**dass** die Schenkel der U-förmigen Mäanderschleife des Heizelements (102, 104) in dem freistehenden, vom Luftstrom umgebenen Bereich mindestens einmal abgewinkelt sind.

2. Heizflansch nach Anspruch 1,
**dadurch gekennzeichnet,**
**dass** das Heizelement (102, 104) gegenüber dem Haltebügel (106) an dessen Basis elektrisch isoliert ist,
wobei eine im Wesentlichen planare, elektrisch isolierende Platte (110) zwischen dem Heizelement (102, 104) und der Basis des Haltebügels (106) angeordnet ist.

3. Heizflansch nach Anspruch 1 oder 2, **dadurch gekennzeichnet, dass** die isolierende Platte (110) aus Glimmer besteht.

4. Heizflansch nach Anspruch 1 oder 2, **dadurch gekennzeichnet, dass** die isolierende Platte (110) aus Pressglimmer besteht.

5. Heizflansch nach Anspruch 1 oder 2, **dadurch gekennzeichnet, dass** die isolierende Platte (110) aus Keramik besteht.

6. Heizflansch nach einem der Ansprüche 1 bis 5, **dadurch gekennzeichnet, dass** die isolierende Platte (110) eine im Wesentlichen rechteckige Form hat.

7. Heizflansch nach einem der Ansprüche 1 bis 6, **dadurch gekennzeichnet, dass** der Grundkörper (101) des Heizflansches (100) weiterhin einen Deckel (108), über den der Heizflansch (100) mit der Ansaugleitung verbindbar ist, aufweist.

8. Heizflansch nach Anspruch 7, **dadurch gekennzeichnet, dass** der Haltebügel (106) mit dem Deckel (108) elektrisch leitend verbunden ist.

9. Heizflansch nach Anspruch 7, **dadurch gekennzeichnet, dass** der Haltebügel (106) gegenüber dem Deckel (108) elektrisch isoliert ist.

10. Heizflansch nach mindestens einem der vorangegangenen Ansprüche,
**dadurch gekennzeichnet,**
**dass** die feste Verbindung an der Basis der U-förmigen Mäanderschleife angeordnet ist.

11. Heizflansch nach Anspruch 10, **dadurch gekennzeichnet, dass** das Heizelement (102, 104) mit dem Haltebügel (106) an dessen Basis vernietet ist.

12. Heizflansch nach Anspruch 10, **dadurch gekennzeichnet, dass** das Heizelement (102, 104) mit dem Haltebügel (106) an dessen Basis verschweißt ist.

13. Heizflansch nach einem der Ansprüche 10 bis 12, **dadurch gekennzeichnet, dass** das Heizelement (102, 104) aus einer ferritischen Eisen-Chrom-AluminiumLegierung herstellbar ist.

14. Heizflansch nach Anspruch 13, **dadurch gekennzeichnet, dass** das Heizelement (102, 104) aus Kanthal D herstellbar ist.

15. Heizflansch nach einem der Ansprüche 10 bis 14, **dadurch gekennzeichnet, dass** der Grundkörper (101) des Heizflansches (100) weiterhin einen Deckel (108), über den der Heizflansch (100) mit der Ansaugleitung verbindbar ist, aufweist.

16. Heizflansch nach Anspruch 15, **dadurch gekennzeichnet, dass** der Haltebügel (106) mit dem Deckel (108) elektrisch leitend verbunden ist.

17. Heizflansch nach Anspruch 15, **dadurch gekennzeichnet, dass** der Haltebügel (106) gegenüber dem Deckel (108) elektrisch isoliert ist.

18. Heizflansch nach mindestens einem der vorangegangenen Ansprüche, **dadurch gekennzeichnet, dass** der Heizflansch (100) ein erstes (102) und ein zweites Heizelement (104) aufweist, die in einer Richtung quer zu dem U-förmigen Querschnitt des Haltebügels (106) gegeneinander versetzt angeordnet sind.

19. Heizflansch nach Anspruch 18, **dadurch gekennzeichnet, dass** die Schenkel der Mäanderschleife des ersten Heizelements (102) in seinen freistehenden, vom Luftstrom umgebenen Bereichen in entgegengesetzter Richtung abgewinkelt sind wie die Schenkel der Mäanderschleife des zweiten Heizelements (104).

20. Heizflansch nach mindestens einem der vorangegangenen Ansprüche,
**dadurch gekennzeichnet,**
**dass** der Haltebügel (106) an seinen Flanken Öffnungen (124) zum Einströmen der zu erwärmenden Luft quer zu der Öffnung des U-förmigen Querschnitts aufweist.

21. Heizflansch nach einem der Ansprüche 1 bis 20, **gekennzeichnet durch** eine Schalteinrichtung zum Ein- und Ausschalten der elektrischen Leistung an dem Heizelement.

22. Heizflansch nach Anspruch 21, **dadurch gekennzeichnet, dass** die elektrische Schalteinrichtung mindestens ein Halbleiterbauelement (136, 138, 140, 142) umfasst.

23. Heizflansch nach einem der Ansprüche 21 oder 22, **gekennzeichnet durch** zwei getrennt ansteuerbare Heizelemente (102, 104), die mit jeweils einer Schalteinrichtung zum Ein- und Ausschalten der elektrischen Leistungszufuhr verbunden sind.

24. Heizflansch nach Anspruch 23, **dadurch gekennzeichnet, dass** die Leistungszufuhr der beiden Heizelemente (102, 104) zeitlich versetzt erfolgt.

25. Heizflansch nach einem der Ansprüche 1 bis 24, **dadurch gekennzeichnet, dass** die Steuerung der Leistungszufuhr des Heizelements (102, 104) mittels eines Mikrocontrollers (144) erfolgt.

26. Heizflansch nach einem der Ansprüche 1 bis 25, **gekennzeichnet durch** mindestens einen Temperaturfühler (146) zum Erfassen auftretender Temperaturwerte,

27. Heizflansch nach Anspruch 26, **dadurch gekennzeichnet, dass** der mindestens eine Temperaturfühler (146) Temperaturwerte der zu erwärmenden Luft detektiert.

## Claims

1. Heating flange, in particular for preheating air in an intake line leading to an internal combustion engine, said heating flange (100) comprising at least one heating element (102, 104) for heating the air flowing past said heating element, and a body (101) for mechanically holding and electrically contacting said heating element (102, 104),
said body comprising a fastening bow (106) having a substantially U-shaped cross-section, and said heating element (102, 104) comprising at least one substantially U-shaped meander loop which is fixedly connected to the base of said fastening bow (106),
**characterized in that**
the legs of the U-shaped meander loop of the heating element (102, 104) are angled at least once in the freestanding area encompassed by the air current.

2. Heating flange according to claim 1,
**characterized in that**
the heating element (102, 104) is electrically insulated from the fastening bow (106) at the base of said bow,
a substantially planar, electrically insulating board (110) being arranged between the heating element (102, 104) and the base of the fastening bow (106).

3. Heating flange according to claim 1 or 2, **characterized in that** the insulating board (110) consists of mica.

4. Heating flange according to claim 1 or 2, **characterized in that** the insulating board (110) consists of micanite.

5. A heating flange according to claim 1 or 2, **characterized in that** the insulating board (110) consists of ceramics.

6. Heating flange according to one of the claims 1 to 5, **characterized in that** the insulating board (110) is substantially rectangular in shape.

7. Heating flange according to one of the claims 1 to 6, **characterized in that** the body (101) of the heating flange (100) additionally comprises a cover (108) through which the heating flange (100) can be connected to the intake line.

8. Heating flange according to claim 7, **characterized in that** the fastening bow (106) is connected to the cover (108) in an electrically conductive manner.

9. Heating flange according to claim 7, **characterized in that** the fastening bow (106) is electrically insulated from the cover (108).

10. Heating flange according to one of the preceding claims,
**characterized in that**
the fixed connection is arranged at the base of the U-shaped meander loop.

11. Heating flange according to claim 10, **characterized in that** the heating element (102, 104) is riveted to the fastening bow (106) at the base of said bow.

12. Heating flange according to claim 10, **characterized in that** the heating element (102, 104) is welded to the fastening bow (106) at the base of said bow.

13. Heating flange according to one of the claims 10 to 12, **characterized in that** the heating element (102, 104) is adapted to be produced from a ferritic iron-chromium-aluminium alloy.

14. Heating flange according to claim 13, **characterized in that** the heating element (102, 104) is adapted to be produced from Kanthal D.

15. Heating flange according to one of the claims 10 to 14, **characterized in that** the body (101) of the heating flange (100) additionally comprises a cover (108) through which the heating flange (100) can be connected to the intake line.

16. Heating flange according to claim 15, **characterized in that** the fastening bow (106) is connected to the cover (108) in an electrically conductive manner.

17. Heating flange according to claim 15, **characterized in that** the fastening bow (106) is electrically insulated from the cover (108).

18. Heating flange according to one of the preceding claims, **characterized in that** the heating flange (100) comprises a first (102) and a second (104) heating element, said heating elements being arranged such that they are displaced relative to one another in a direction transversely to the U-shaped cross-section of the fastening bow (106).

19. Heating flange according to claim 18, **characterized in that** the legs of the meander loop of the first heating element (102) are angled in the freestanding, air current-encompassed areas thereof in a direction opposite to the direction in which the legs of the meander loop of the second heating element (104) are angled.

20. Heating flange according to one of the preceding claims,
**characterized in that**
the fastening bow (106) is provided with openings (124) formed in the flanks thereof and used for allowing the air to be heated to flow in transversely to the opening of the U-shaped cross-section.

21. Heating flange according to one of the claims 1 to 20, **characterized by** a switching means for switching on and off the electric power at the heating element.

22. Heating flange according to claim 21, **characterized in that** the electric switching means comprises at least one semiconductor device (136, 138, 140,142).

23. Heating flange according to one of the claims 21 or 22, **characterized by** two separately controllable heating elements (102, 104) which are each connected to a respective switching means for switching on and off the electric power supply.

24. Heating flange according to claim 23, **characterized in that** the two heating elements (102, 104) have power supplied thereto in a time-shifted manner.

25. Heating flange according to one of the claims 1 to 24, **characterized in that** the power supply of the heating element (102, 104) is controlled by means of a microcontroller (144).

26. Heating flange according to one of the claims 1 to 25, **characterized by** at least one temperature sensor (146) for detecting respective temperature values occurring.

27. Heating flange according to claim 26, **characterized in that** the at least one temperature sensor (146) detects temperature values of the air to be heated.

## Revendications

1. Bride d'échauffement, en particulier pour le préchauffage d'air dans une conduite d'admission menant à un moteur à combustion interne, la bride d'échauffement (100) présentant au moins un élément chauffant (102, 104), pour chauffer l'air passant sur elle, ainsi qu'un corps de base (101), pour le maintien mécanique et la mise en contact électrique de l'élément chauffant (102, 104),
où le corps de base présente un étrier de maintien (106) ayant une section transversale sensiblement en forme de U et l'élément chauffant (102, 104) comprend au moins une boucle en méandre conformée sensiblement en forme de U, reliée rigidement à l'étrier de maintien (106), à sa base,
**caractérisée en ce que**
les branches de la boucle en méandre en forme en U de l'élément chauffant (102, 104) sont coudées au moins une fois dans la zone libre, entourée par l'écoulement d'air.

2. Bride d'échauffement selon la revendication 1, **caractérisée en ce que** l'élément chauffant (102, 104) est isolé électriquement par rapport à l'étrier de maintien (106), sur sa base,
où une plaque (110) sensiblement plane, isolant de l'électricité, est disposée entre l'élément chauffant (102, 104) et la base de l'étirer de maintien (106).

3. Bride d'échauffement selon la revendication 1 ou 2, **caractérisée en ce que** la plaque isolante (110) est formée de mica.

4. Bride d'échauffement selon la revendication 1 ou 2, **caractérisée en ce que** la plaque isolante (110) est formée de mica compressé.

5. Bride d'échauffement selon la revendication 1 ou 2, **caractérisée en ce que** la plaque isolante (110) est formée de céramique.

6. Bride d'échauffement selon l'une des revendications 1 à 5, **caractérisé en ce que** la plaque isolante (110) a une forme sensiblement rectangulaire.

7. Bride d'échauffement selon l'une des revendications 1 à 6, **caractérisé en ce que** le corps de base (101) de la bride d'échauffement (100) présente au moins un couvercle (108), par l'intermédiaire duquel la bride d'échauffement (100) est susceptible d'être reliée à la conduite d'admission.

8. Bride d'échauffement selon la revendication 7, **caractérisée en ce que** l'étrier de maintien (106) est relié au couvercle (108) de façon conductrice de l'électricité.

9. Bride d'échauffement selon la revendication 7, **caractérisée en ce que** l'étrier de maintien (106) est isolé électriquement par rapport au couvercle (108).

10. Bride d'échauffement selon au moins l'une des revendications précédentes, **caractérisée en ce que** la liaison rigide est disposée sur la base de la boucle en méandre en forme de U.

11. Bride d'échauffement selon la revendication 10, **caractérisée en ce que** l'élément chauffant (102, 104) est riveté à l'élément de maintien (106), sur sa base.

12. Bride d'échauffement selon la revendication 10, **caractérisée en ce que** l'élément chauffant (102, 104) est soudé à l'étrier de maintien (106), sur sa base.

13. Bride d'échauffement selon l'une des revendications 10 à 12, **caractérisée en ce que** l'élément chauffant (102, 104) est susceptible être fabriqué en un alliage ferritique, fer-chrome-aluminium.

14. Bride d'échauffement selon la revendication 13, **caractérisée en ce que** l'élément chauffant (102, 104) est susceptible d'être fabriqué en kanthal D.

15. Bride d'échauffement selon l'une des revendications 10 à 14, **caractérisée en ce que** le corps de base (101) de la bride d'échauffement (100) présente en plus un couvercle (108), par l'intermédiaire duquel la bride d'échauffement (100) est susceptible d'être reliée à la conduite d'admission.

16. Bride d'échauffement selon la revendication 15, **caractérisée en ce que** l'étrier de maintien (106) est relié au couvercle (108) de façon conductrice de l'électricité.

17. Bride d'échauffement selon la revendication 15, **caractérisée en ce que** l'étrier de maintien (106) est isolé électriquement par rapport au couvercle (108).

18. Bride d'échauffement selon au moins l'une des revendications précédentes, **caractérisée en ce que** la bride d'échauffement (100) présente un premier (102) et un deuxième élément chauffant (104), disposés de façon mutuellement décalée dans une direction transversale par rapport à la section transversale en forme de U de l'étrier de maintien (106).

19. Bride d'échauffement selon la revendication 18, **caractérisée en ce que** les branches de la boucle en méandre du premier élément chauffant (102) dans ses zones libres, entourées par l'écoulement d'air, sont coudées en sens opposé, comme les branches de la boucle en méandre du deuxième élément chauffant (104).

20. Bride d'échauffement selon au moins l'une des revendications précédentes, **caractérisée en ce que** l'étrier de maintien (106) présente sur ses flancs des ouvertures (124), pour l'entrée d'écoulement de l'air à chauffer transversalement par rapport à l'ouverture de la section transversale en forme de U.

21. Bride d'échauffement selon l'une des revendications 1 à 20, **caractérisée par** un dispositif de commutation, servant à produire la mise en service et hors service de l'énergie électrique fournie à l'élément chauffant.

22. Bride d'échauffement selon la revendication 21, **caractérisée en ce que** le dispositif de commutation électrique comprend au moins un composant à semiconducteur (136, 138, 140, 142).

23. Bride d'échauffement selon l'une des revendications 21 ou 22, **caractérisée par** deux éléments chauffants (102, 104) pouvant être commandés séparément reliés chacun à un dispositif de commutation pour la mise en service et hors service de l'amenée d'énergie électrique.

24. Bride d'échauffement selon la revendication 23, **caractérisée en ce que** l'amenée d'énergie aux deux éléments chauffants (102, 104) s'effectue de façon temporellement décalée.

25. Bride d'échauffement selon l'une des revendications 1 à 24, **caractérisée en ce que** la commande de l'amenée d'énergie de l'élément chauffant (102, 104) est effectué au moyen d'un microcontrôleur (144).

26. Bride d'échauffement selon l'une des revendications 1 à 25, **caractérisée par** au moins une sonde de température (146), pour la détection des valeurs de température se produisant.

27. Bride d'échauffement selon la revendication 26, **caractérisée en ce que** la au moins une sonde de température (146) détecte des valeurs de température de l'air à chauffer.
